# EUROPÄISCHE PATENTSCHRIFT

(11) **EP 0 837 454 B1**
(45) Veröffentlichungstag und Bekanntmachung des Hinweises auf die Patenterteilung: **30.10.2002**
(21) Anmeldenummer: 97110611.7
(22) Anmeldetag: 28.06.1997
(51) Int. Cl.: G11B 7/007, G11B 7/09

(54) **Leitstrukturen in optischen Speichermedien**
Guide groove structure in optical storage media
Sillon de guidage pour support de stockage optique

(30) Priorität: 19.10.1996 DE 19643214
(43) Veröffentlichungstag der Anmeldung: 22.04.1998
(73) Patentinhaber: OPTICAL DISC CORPORATION, Santa Fe Springs California 90670 (US)
(72) Erfinder: Schoofs, Rainer, 47546 Kalkar (DE)
(74) Vertreter: Enskat, Michael Antony Frank

(56) Entgegenhaltungen:
- DE-A- 3 714 804
- US-A- 4 893 298
- US-A- 4 954 380
- US-A- 4 985 881

## Beschreibung

Die Erfindung betrifft ein Verfahren zur Herstellung einer Masterdisk für die Abformung optischer Speicherplatten.

Optische Speicherplatten (Compact Disk, CD) haben eine ebene Oberfläche, in die entlang einer spiralförmigen oder konzentrischen Spur Vertiefungen (pits) vorgebbarer Länge eingebracht sind, wobei zwischen zwei in der Spur aufeinanderfolgenden Vertiefungen ein nicht vertiefter Bereich (Brückenbereich oder land) liegt und die Information, die in der Länge der Vertiefungen und/oder in der Länge der Brückenbereiche kodiert ist, mittels eines Laserstrahles entnehmbar ist. Dabei ist unter einer Spur nicht eine mit physikalischen Mitteln markierte Spur sondern lediglich eine virtuelle Spur als vorgegebener Weg des Laserstrahles auf der Oberfläche zu verstehen.

Auf den kreisrunden optischen Speichermedien wird digitale Information durch die Abfolge von Vertiefungen, gespeichert. Dabei ist die Information sowohl durch die Länge der Vertiefungen als auch die Länge der von der Oberfläche gebildeten Zwischenräume entlang der Spur kodiert.

Bei der Fertigung solcher Speichermedien wird zwischen der Herstellung einer Masterdisk (Stamper) und deren Vervielfältigung durch Abformung unterschieden. Es sind im Wesentlichen zwei Verfahren zur Herstellung einer Masterdisk bekannt, bei denen mittels eines Laserstrahls Information auf die Oberfläche der Masterdisk geschrieben wird.

In einem ersten Verfahren ("Photoresist Mastering") wird eine Platte mit photosensibler Oberfläche mittels eines fokussierten Laserstrahles belichtet. Zwischen den einzelnen Belichtungsphasen wird die Intensität des Laserstrahls ausgeblendet. Bei der chemischen Entwicklung der photosensiblen Oberfläche bilden die belichteten Stellen Vertiefungen aus, während die Oberfläche zwischen den belichteten Stellen nicht angegriffen wird.

In einem anderen Verfahren ("Non Photoresist Mastering") wird eine Glasplatte mit einer Schicht aus organischem Material (organic dye) versehen. In diese Schicht werden mittels eines Laserstrahles Vertiefungen direkt eingebrannt bzw. eingeschmolzen. Die Zwischenräume werden durch ein Ausblenden oder durch schnelles Ausschalten des Laserstrahles vor dessen Wirkung verschont.

Die US 4 893 298 offenbart eine Vorrichtung und ein Verfahren zum Betrieb der Vorrichtung, mit der in eine Masterdisk Leitstrukturen eingebracht werden können. Hier werden mit zwei verschiedenen Laserstrahlen unterschiedlicher Breite verschieden breite Spuren in die Oberfläche einer Disk eingebracht, wobei die breiteren Bereiche vorgesehen sind, um eine Leitspur für einen abtastenden Laserstrahl zu bilden. Eine Nachführung eines abtastenden Laserstrahles ist bei einer Speicherdisk, die mit dem bekannten Verfahren hergestellt wurde nur in den breiten Spurbereichen möglich, nicht jedoch in den schmalen Bereichen, in denen ebenfalls auszuwertende Information abgelegt ist, so daß es in den schmalen Spurbereichen zu Problemen bei der Spurnachführung kommen kann.

Die Verwendung von Leitstrukturen in Form von Führungsrillen bei optischen Speichermedien ist auch aus der US 4 985 881 bekannt. Die US 4 954 380 offenbart weiterhin ein optisches Speichermedium mit einem Substrat und einer darauf angeordneten Speicherschicht, wobei die Speicherschicht in Datenbereiche und Führungsbereiche unterteilt ist, von denen letztere zum Führen sowohl eines Aufzeichnungslasers als auch eines Abtastlasers dienen.

Die auf einer CD kodierte Information wird mittels des Abtaststrahles eines im Abspielgerät befindlichen Lasers ausgelesen. Dabei wird die CD unter dem Laserstrahl rotiert und das von der Oberfläche reflektierte Signal des Lasers aufgenommen. Die Qualität der ausgelesenen Information ist dabei um so höher, je schärfer die Vertiefungen im Bereich ihrer Ränder definiert sind und je genauer der Laserstrahl von einer Vertiefung zur nächsten findet. Um Fehler zu vermeiden untersucht die zur Auslese bestimmte Elektronik das reflektierte Signal, bevor sie es akzeptiert. Eine Reflexion vom unscharfen Rand der Vertiefung bewirkt dabei einen Fehler, da das Signal nicht genügend Anteile aufweist, welche die erforderliche Phasenverschiebung von der Hälfte der Wellenlänge haben.

Um solche Fehler zu vermeiden wird der Abtaststrahl eines Abspielgerätes auf die gewünschte Spur justiert. Dazu wird bekanntermaßen eine Regelung verwendet, die den Strahl beim Durchfahren einer Vertiefung nach der Intensität des reflektierten und in seiner Phase verschobenen Lichtes minimiert ("push-pull" Regelung). Die phasenverschobenen Anteile werden im Wesentlichen durch Reflexionen an unscharfen Rändern der Vertiefungen hervorgerufen. Nachdem der Strahl beim Durchlaufen einer Vertiefung durch die "push-pull" Regelung zentriert wurde, kann er jedoch auf dem Weg zur nächsten Vertiefung wieder außer Kontrolle geraten. Bei der "push-pull" Regelung an herkömmlichen CD's kann ein Sprung auf eine falsche Spur nicht ausgeschlossen werden.

Aufgabe der Erfindung ist es, ein Verfahren zur Herstellung einer Masterdisk so zu verbessern, daß auf den abgeformten Speichermedien eine sichere Führung des Laserstrahles eines Abspielgerätes auch zwischen zwei Vertiefungen ermöglicht ist. Außerdem ist es Aufgabe der Erfindung, ein einfaches und kostengünstiges Verfahren zu schaffen, mit dem eine Masterdisks zur Herstellung der erfindungsgemäßen Speichermedien gefertigt werden kann.

Diese Aufgabe wird erfindungsgemäß durch ein Herstellungsverfahren nach dem Anspruch 1 gelöst.

Vorteilhafte Ausführungsformen des erfindungsgemäßen Verfahrens sind in den Unteransprüchen aufgeführt.

Durch die erfindungsgemäß hergestellte Leitstruktur wird der Strahl des abtastenden Lasers in der (virtuellen) Spur von einer Vertiefung zur nächsten geführt, ohne daß es zu wesentlichen Abweichungen kommt. Die erfindungsgemäß hergestellte Leitstruktur, die zwischen zwei Vertiefungen entlang der Spur angeordnet ist, unterscheidet sich in ihrer optischen Eigenschaft hinsichtlich der Reflexion des Laserstrahles sowohl von der ebenen Oberfläche der CD als auch von den Vertiefungen (pits).

Wegen der geringeren Tiefe der Leitstruktur kommt es nicht zu einer auswertbaren Phasenverschiebung des reflektierten Lichtes um die Hälfte der Wellenlänge, so daß die Reflexion an der Leitstruktur nicht mit einem Informationssignal aus einer Vertiefung verwechselt werden kann. Die Reflexion an der Leitstruktur dient damit ausschließlich der Justierung des abtastenden Laserstrahles durch die "push-pull" Regelung, während der Laserstrahl die Brückenbereiche (lands) zwischen zwei Vertiefungen überstreicht Da der Strahl nunmehr automatisch beim Überstreichen der Brückenbereiche auf die zentrale Achse justiert wird, ist die Wahrscheinlichkeit gering, daß eine diffuse Reflexion vom Randbereich der Vertiefung zu einem Fehler führt. Das System reagiert weniger empfindlich auf Ungenauigkeiten, die bei der Fertigung an den Rändern der Vertiefungen entstehen. Durch die Verwendung von Leitstrukturen erhält die über das "non photoresist mastering" hergestellte CD bessere Wiedergabequalitäten als eine über das bisher verwendete "non photoresist mastering" (ohne Leitstruktur) gefertigte CD. Die Qualität der über das "photoresist mastering" gefertigten CD's läßt sich ebenfalls durch die erfindungsgemäß hergestellten Leitstrukturen verbessern.

Dabei können beliebige Veränderung in der Oberfläche der CD als Leitstrukturen benutzt werden. Die Leitstruktur sollte sich dadurch auszeichnen, daß sie Licht etwa symmetrisch zu beiden Seiten der virtuellen Spur reflektiert und dabei keine Phasenverschiebung um die Hälfte der Wellenlänge hervorruft. Dabei ist es fertigungstechnisch besonders günstig, die Leitstrukturen als Vertiefungen insbesondere als Leitkanäle auszubilden, die aus der Oberfläche ausgenommen sind und die sich im Querschnitt vom Querschnitt der Vertiefungen unterscheiden. Eine besonders stabile Regelung wird dadurch erreicht, daß zwei Vertiefungen durch einen Leitkanal verbunden sind.

Die Leitkanäle haben im Verhältnis zu den Vertiefungen eine geringere Breite und/oder eine geringere Tiefe, die etwa 5% bis 10% der Tiefe der Vertiefungen entspricht. Dabei sollte die Tiefe ein Viertel der Wellenlänge nicht überschreiten. Vorteilhafterweise haben die Vertiefungen schräge Wände, die sich im Bodenbereich treffen. Ein solcher Querschnitt, der keine zur Oberfläche parallele Bodenfläche hat, trägt dazu bei, daß ein Großteil des einfallenden Laserlichtes symmetrisch aus dem Lot heraus gestreut wird.

Vorteilhaft ist, daß sich die Masterdisks zur Herstellung der erfindungsgemäßen CD's mit den bisher verwendeten Maschinen ohne großen Umbau einfach und kostengünstig fertigen lassen. Damit ist gleichfalls eine kostengünstige Herstellung von qualitativ besonders hochwertigen CD's möglich.

Es ist zudem vorteilhaft, daß sich die erfindungsgemäßen CD's mit den bekannten Geräten abspielen lassen. Eine Modifikation der vorhandenen "push-pull" Regelung ist nicht nötig, da die Regelung automatisch das Signal zwischen den Vertiefungen einbezieht.

Es ist besonders vorteilhaft, daß das Aufbringen der erfindungsgemäßen Leitstrukturen mit den bekannten Verfahren geschehen kann. Dadurch bleiben bei erhöhter Qualität die Produktionskosten der CD's gleich. Besonders einfach läßt sich das "Non Photoresist Mastering" auf die neuen Verhältnisse einstellen. Dazu ist es lediglich notwendig nach dem Brennen einer Vertiefung die Intensität des Lasers zu reduzieren und damit den Brückenbereich zur nächsten Vertiefung zu überstreichen.

Durch einfache Modifikationen an der Belichtungsoptik können auch mit dem "Photoresist Mastering" die Masterdisks der erfindungsgemäßen Speichermedien hergestellt werden.

Ein optisches Speichermedium (CD), welches von einer erfindungsgemäß hergestellten Masterdisk abgeformt ist, ist in den Zeichnungen dargestellt und wird im folgenden näher beschrieben.

Es zeigen:
- **Figur 1**: einen Ausschnitt aus der Oberfläche einer CD in Draufsicht,
- **Figur 2**: einen Schnitt durch die Oberfläche einer CD,
- **Figur 3**: die Intensität eines schreibenden Laserstrahles.

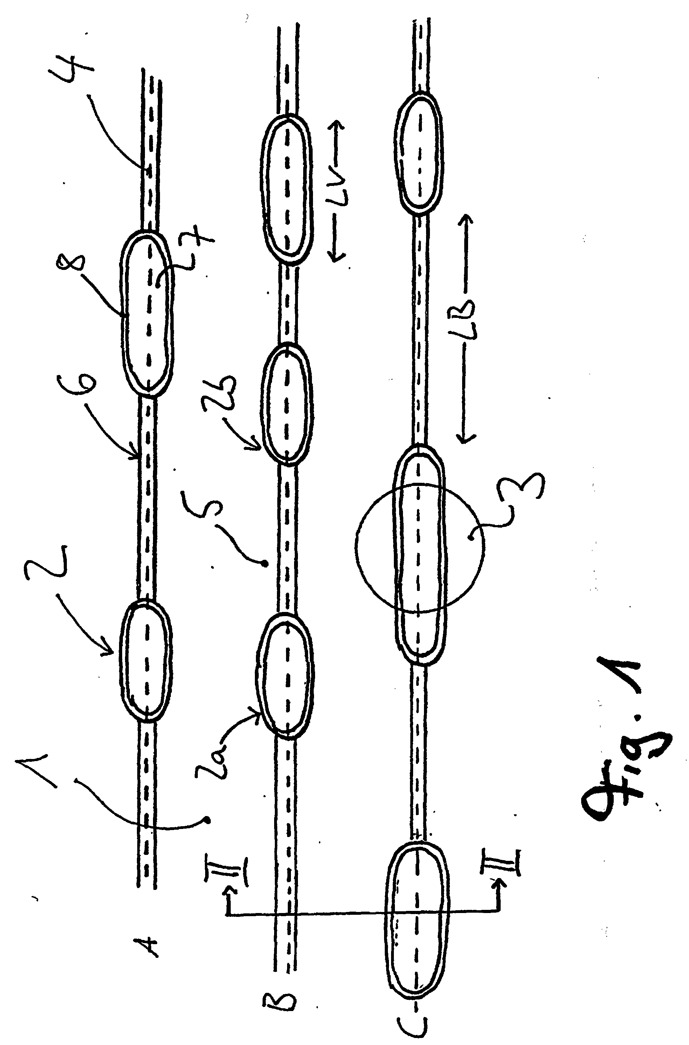

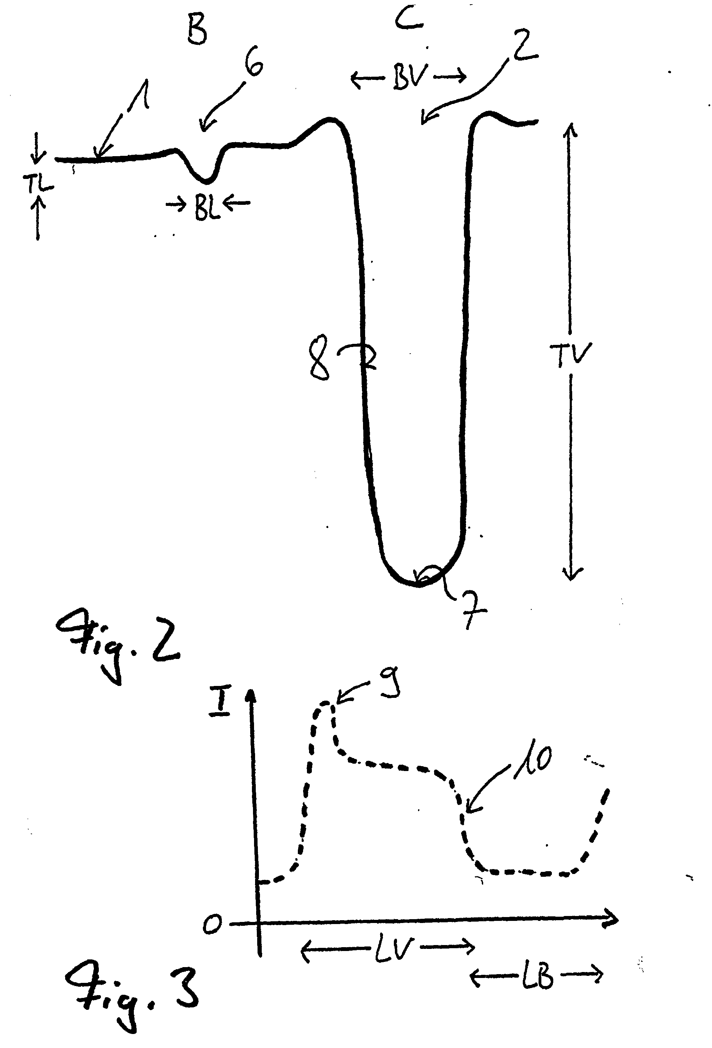

Figur 1 zeigt einen Ausschnitt aus der Oberfläche 1 eines optischen Speichers, wie er als Compact Disk oder kurz CD bekannt ist, mit drei parallelen Spuren A, B und C. In die ebene Oberfläche 1 sind Vertiefungen 2 (pits) eingebracht, die in diesem Falle auf konzentrischen Kreisbahnen liegen. Die Kreisbahn, auf der sich der abtastende Laserstrahl mit dem Strahlfleck 3 eines Abspielgerätes bewegt, ist eine virtuelle Spur 4 und als unterbrochene Linie dargestellt. Die Vertiefungen 2 haben wie in Figur 2 gezeigt eine Breite BV und eine Tiefe TV, die insbesondere einem Viertel der Wellenlänge des Lichtes des abtastenden Laserstrahles entspricht. Zwischen zwei Vertiefungen 2a, 2b liegen in der Ebene der Oberfläche Brückenbereiche (lands) 5. Die auf der CD enthaltene Information ist bekanntermaßen in der Länge LV der Vertiefungen 2 und in der Länge LB der Brückenbereiche 5 kodiert.

Jeweils zwei Vertiefungen 2 sind durch eine Leitstruktur 6 verbunden, die in diesem Falle ein in die Oberfläche 1 eingebrachter Leitgraben 6 ist. Die Leitgräben 6 sind wie die Vertiefungen 2 axial zur Spur 3 angeordnet. Sie weisen eine geringere Breite BL und eine geringere Tiefe TL als die Vertiefungen 2 auf.

Wenn das Licht des abtastenden Laserstrahles mit dem Strahlfleck 3 auf eine Vertiefung 2 trifft, wird es zum Teil vom Boden 7 und zum Teil von den Wänden 8 in einen im Abspielgerät angebrachten nicht dargestellten Detektor reflektiert, der die reflektierte Intensität registriert. Um eine Justierung des Strahlfleckes durch die "push-pull" Regelung zu bewerkstelligen ist der Detektor parallel zur Spur 4 in mindestens zwei Bereiche unterteilt, in denen die reflektierte Intensität getrennt aufgenommen wird. Bei einer Verschiebung des Strahlfleckes 3 aus der Spur 4 verändert sich das Verhältnis der in die beiden Bereiche gestreuten Intensität.

Überstreicht der Strahlfleck 3 einen Brückenbereich 5, so wird er zum Teil durch die wirksame Fläche des Leitgrabens 6 reflektiert. Wie vorher die Vertiefung 2, so bewirkt nun der Leitgraben 6 die Aufstreuung des reflektierten Lichtes in der Richtung senkrecht zur Spur 4, so daß die Intensität des reflektierten Lichtes pro Flächeneinheit abnimmt. Die damit hervorgerufene inhomogene Intensitätsverteilung des reflektierten Strahles in dieser Richtung läßt sich gleichfalls für die "push-pull" Regelung verwenden. Da der Leitgraben 6 keine Phasenverschiebung um eine halbe Wellenlänge bewirkt, läßt er sich leicht von einer Vertiefung 2 unterscheiden. Die optische Eigenschaft der Leitgräben 6 ist somit grundlegend anders als die der Vertiefungen 2, die in ihrer Breite und Tiefe einen im wesentlichen gleichförmigen Querschnitt aufweisen.

In Figur 2 ist ein Schnitt durch die Oberfläche 1 der in Figur 1 (Schnitt II-II) dargestellten CD senkrecht zur den beiden Spuren B und C gezeigt. Der Schnitt zeigt den Querschnitt einer Vertiefung 2 und eines Leitgrabens 6. Das Verhältnis der Tiefen TL und TV sowie der Breiten BL und BV ist dabei deutlich zu erkennen.

Im folgenden sei ein "Non Photoresist Mastering" Verfahren aufgezeigt, mit dem eine Masterdisk hergestellt werden kann, die für die Fertigung des "Stampers" für die Vervielfältigung der CD's dienen kann. Auf bekannte Weise wird zunächst eine mit einer Deckschicht aus organischem Material belegte Glasscheibe in der Form der späteren CD gefertigt. Diese beschichtete Glasscheibe wird in einen Automaten eingespannt, und um ihre Achse rotiert. Entsprechend der Information, die von einem Masterband kommt und digitalisiert ist, wird ein in seiner Intensität einstellbarer Laser geschaltet, unter dessen Laserstrahl die Scheibe rotiert.

Entsprechend der in Figur 3 gezeigten Verteilung wird die Intensität I des Laserstrahles zu Beginn einer Vertiefung auf ein Maximum 9 geregelt. Die Intensität I nimmt über die Strecke der einzubrennenden Vertiefung der Länge LV ab. Durch die Abnahme wird eine gleichmäßige Tiefe über die Länge LV erzeugt. Am Übergangsbereich 10 der Vertiefung 2 wird die Intensität drastisch auf einen Wert von 2% - 20% reduziert und in dieser Größe über die Länge LB eines Brückenbereiches 5 konstant gehalten. Der Nullpunkt ist an der Ordinate des Koordinatensystemes mit 0 bezeichnet. Durch die Reduzierung der Intensität des Laserstrahls wird eine Leitstruktur in die Deckschicht eingebracht.

## Patentansprüche

1. Verfahren zur Herstellung einer Masterdisk für die Abformung optischer Speicherplatten mit folgenden Schritten:
a) Ein kreisrunder insbesondere aus Glas gefertigter Rohling wird mit einer Deckschicht organischen Materials belegt,
b) die Deckschicht wird unter Drehung des Rohlings um seine zentrale Achse mit einem einzigen Laserstrahl bestrahlt, wobei der Laserstrahl einer konzentrischen oder spiralförmigen Spur (4) auf der Oberfläche folgt,
c) durch Erhöhung der Intensität des Laserstrahls wird eine Vertiefung (2) in die Deckschicht eingebracht, insbesondere eingeschmolzen, wobei Information in der Länge (LV) der Vertiefung (2) und/oder in der Länge (LB) des zwischen zwei Vertiefungen (2) liegenden Brückenbereiches kodiert ist, und
d) in jeden nach einer Vertiefung folgenden Brückenbereich wird durch Reduzierung der Intensität des Laserstrahls auf einen Wert größer Null eine Leitstruktur (6) eingebracht, bevor eine erneute Erhöhung der Intensität eine weitere Vertiefung (2) einbringt.

2. Verfahren nach Anspruch 1, **dadurch gekennzeichnet, daß** die Intensität des Laserstrahls beim Einbringen der Leitstruktur 2 bis 20 Prozent der Maximalintensität entspricht.

3. Verfahren nach einem der vorherigen Ansprüche, **dadurch gekennzeichnet, daß** beim Einbringen einer Vertiefung (2) zu Beginn der Vertiefung (2) die Intensität des Laserstrahles auf ein Maximum geregelt wird und anschließend über die Strecke der Vertiefung (2) abnimmt.

4. Verfahren nach einem der vorherigen Ansprüche, **dadurch gekennzeichnet, daß** die Leitstruktur (6) durch mindestens eine Ausnehmung (6) ausgebildet wird, die in die Oberfläche der Speicherplatte eingebracht wird.

5. Verfahren nach einem der vorherigen Ansprüche, **dadurch gekennzeichnet, daß** die Ausnehmung als Leitkanal (6) ausgebildet wird, der eine geringe Breite (BL) als die Verteifungen (2) aufweist.

6. Verfahren nach einem der vorherigen Ansprüche, **dadurch gekennzeichnet, daß** die Ausnehmung als Leitkanal (6) ausgebildet wird, der eine geringere Tiefe (BT) als die Verteifungen (2) aufweist.

## Claims

1. Method for manufacturing a master disk for the duplication-molding of optical storage disks with the following steps
(a) a circular blank, manufactured particularly from glass, is coated with a covering layer of organic material,
(b) the covering layer is subjected to irradiation by means of a single laser beam while the blank is being rotated about its central axis, the laser beam following a concentric or spiral-shaped track (4) on the surface,
(c) by increasing the intensity of the laser beam, a depression (2) is introduced, particularly by burning, into the covering layer, with information being encoded in the length (LV) of the depression (2) and/or the length (LB) of the bridging portion between two depressions (2),
(d) by reducing the intensity of the laser beam to a value greater than zero, a guiding structure (6) is introduced into each bridging portion following a depression before a renewed increase in the intensity introduces a further depression (2).

2. Method according to claim 1, **characterized in that** the intensity of the laser beam when introducing the guiding structure is 2 percent to 20 percent of the maximum intensity.

3. Method according to any of the preceding claims, **characterized in that** the intensity of the laser beam when introducing a depression (2) is set to a maximum at the start of the depression (2) and then decreases over the length of the depression (2).

4. Method according to any of the preceding claims, **characterized in that** the guiding structure (6) is formed by at least one recess (6) introduced into the surface of the storage disk.

5. Method according to any of the preceding claims, **characterized in that** the recess is formed as a guiding channel (6) having a smaller width (BL) than the depressions (2).

6. Method according to any of the preceding claims, **characterized in that** the recess is formed as a guiding channel (6) having a smaller depth (BT) than the depressions (2).

## Revendications

1. Une procédure pour la fabrication d'un disque matrice pour le formage de disques de mémoire optiques, présentant les étapes suivantes :
a. une pièce à usiner parfaitement ronde, en particulier fabriquée en verre, est recouverte d'une couche de revêtement en matériau organique,
b. pendant que la pièce à usiner tourne autour de son axe central, la couche de revêtement est irradiée par un rayon laser unique, cependant que le rayon laser suit une trace (4) concentrique ou en forme de spirale sur la surface supérieure,
c. une augmentation de l'intensité du rayon laser permet d'introduire un creux (2), en particulier par fonte, dans la couche de revêtement, cependant que de l'information est codée dans la longueur (LV) du creux (2) et/ou dans la longueur (LB) de la zone de pont située entre deux creux (2), et
d. une réduction de l'intensité du rayon laser à une valeur supérieure à zéro permet d'introduire une structure (6) de guidage dans chaque zone de pont, qui succède à un creux, avant qu'une nouvelle augmentation de l'intensité n'introduise un creux (2) supplémentaire.

2. Une procédure conforme à la revendication n° 1, **caractérisée en ce que**, lors de l'introduction de la structure de guidage, l'intensité du rayon laser est égale à entre 2 et 20 pour cent de l'intensité maximum.

3. Une procédure conforme à une des revendications précédentes, **caractérisée en ce que**, lors de d'introduction d'un creux (2), l'intensité du rayon laser est calibrée sur une valeur maximum au début du creux (2), pour ensuite diminuer le long de la trajectoire du creux (2).

4. Une procédure conforme à une des revendications précédentes, **caractérisée en ce que** la structure (6) de guidage est formée par au moins un évidement (6), qui est introduit dans la surface supérieure du disque de mémoire.

5. Une procédure conforme à une des revendications précédentes, **caractérisée en ce que** l'évidement est conçu sous forme de canal (6) de guidage, présentant une largeur (BL) inférieure à celle des creux (2).

6. Une procédure conforme à une des revendications précédentes, **caractérisée en ce que** l'évidement est conçu sous forme de canal (6) de guidage, présentant une profondeur (BT) inférieure à celle des creux (2).
